# EUROPEAN PATENT APPLICATION

(11) **EP 2 924 628 A1**
(43) Date of publication of application: **30.09.2015**
(21) Application number: 15000093.3
(22) Date of filing: 15.01.2015
(51) Int. Cl.: G06Q 10/10, G06Q 50/00

(54) **Method of providing information, server device and information terminal**

(30) Priority: 25.03.2014 JP 2014061447
(71) Applicant: Hitachi, Ltd., Tokyo 100-8280 (JP)
(72) Inventor: Yamashita, Toshio, Tokyo, 100-8280 (JP); Matsushita, Naoki, Tokyo, 100-8280 (JP)
(74) Representative: Strehl Schübel-Hopf & Partner

(57) **Abstract**

A method of providing information based on posted information having location information from a server in which the posted information is accumulated in advance includes: deciding a driver of a vehicle and one or more fellow passengers who are aboard on the vehicle; identifying a destination candidate of the vehicle based upon access histories of the posted information by the driver and the fellow passenger or passengers; acquiring pieces of posted information concerning a destination set based upon the destination candidate from among the posted information; and performing provision of information based upon the acquired pieces of the posted information to the driver and the fellow passenger or passengers from the server device.

## Description

The disclosure of the following priority application is herein incorporated by reference: Japanese Patent Application No. 2014-061447 filed March 25, 2014.

The present invention relates to a method of providing information, a server device and an information terminal.

In recent years, an information sharing service called SNS (Social Networking Service) is used extensively. For instance, Japanese Laid Open Patent Publication No. 2013-122379 discloses a navigation device, which retrieves facility records based upon a destination name designated by the user and acquires coordinates of a posted article containing the destination name among the articles posted by the user accumulated in the SNS server and then compares the acquired coordinates with the coordinates of the retrieved facility record. Based upon the result of the retrieval, the navigation device sets priority in which the result of retrieval is displayed in the form of a list of candidates for destination.

The navigation device disclosed in Japanese Laid Open Patent Publication No. 2013-122379 sets the order of priority of the retrieved facility records by using the posted articles of the individual users. Therefore, in case that a plurality of users take a car ride together toward a destination, it is difficult to set appropriate priority taking into consideration the status of utilization of the SNS by each of the users.

In addition, the SNS typically enables a plurality of users to access common posted information and causes the posted information to be shared by the users. In contrast, however, no consideration is made on this merit of the SNS according to the technology disclosed in Japanese Laid Open Patent Publication No. 2013-122379.

The present invention has been achieved to solve the above-mentioned problem of the conventional art. The present invention has for its main object to provide each of a plurality of users with appropriate information based upon posted information accumulated in advance in a server device in case that the users take a car ride together toward a destination.

A method of providing information according to a first aspect of the present invention, based on posted information having location information from a server in which the posted information is accumulated in advance, includes: deciding a driver of a vehicle and one or more fellow passengers who are aboard on the vehicle; identifying a destination candidate of the vehicle based upon access histories of the posted information by the driver and the fellow passenger or passengers; acquiring pieces of posted information concerning a destination set based upon the destination candidate from among the posted information; and performing provision of information based upon the acquired pieces of the posted information to the driver and the fellow passenger or passengers from the server device.

According to a second aspect of the present invention, in the method of providing information of the first aspect, it is preferred that the server device: acquires probe information from each of a plurality of persons inclusive of the driver; compares the acquired probe information of the driver with the acquired probe information of each of the persons other than the driver at every predetermined cycles; and decides a person whose probe information has a difference from the probe information of the driver which is within a predetermined range predetermined times consecutively as the fellow passenger.

According to a third aspect of the present invention, in the method of providing information of the second aspect, it is preferred that the probe information includes at least one of location information, acceleration information and moving direction information.

According to a fourth aspect of the present invention, in the method of providing information of any one of the first through third aspects, it is preferred that the server device: calculates respective number of times of access by the driver and the fellow passenger or passengers to the respective pieces of the posted information; and identifies spots corresponding to pieces of the posted information whose calculated numbers of times of access are each equal to or greater than a predetermined value as the destination candidates.

According to a fifth aspect of the present invention, in the method of providing information of the fourth aspect, the server device may provide the driver with destination candidate information for displaying a list of the destination candidates with placing priority to a particular spot corresponding to a piece of the posted information whose number of times of access is maximal and those spots that are present in an area within a predetermined range from the particular spot among the spots identified as the destination candidates.

According to a sixth aspect of the present invention, in the method of providing information of any one of the first through fifth aspects, it is preferred that the server device acquires, as the posted information concerning the destination, a piece of the posted information having location information of a spot that is present in an area within a predetermined range from the destination among the pieces of the posted information accessed by the driver or the fellow passenger or passengers.

A server device according to a seventh aspect of the present invention includes: an information accumulation unit in which posted information having location information is accumulated in advance; a fellow passenger decision unit that decides a driver of a vehicle and one or more fellow passengers who are aboard on the vehicle; a destination decision unit that identifies a destination candidate of the vehicle based upon access histories of the posted information by the driver and the fellow passenger or passengers; and a destination-circumjacent area information acquisition unit that acquires, from among the posted information accumulated in the information accumulation unit, those pieces of posted information concerning a destination set based upon the destination candidate identified by the destination decision unit, and that transmits destination-circumjacent area information based upon the acquired pieces of the posted information to the driver and the fellow passenger or passengers.

According to an eighth aspect of the present invention, in the server device of the seventh aspect, it is preferred that the fellow passenger deciding unit: acquires probe information from each of a plurality of persons inclusive of the driver; compares the acquired probe information of the driver with the acquired probe information of each of the persons other than the driver at every predetermined cycles; and decides a person whose probe information has a difference from the prove information of the driver which is within a predetermined range predetermined times consecutively as the fellow passenger.

According to a ninth aspect of the present invention, in the server device of the eighth aspect, it is preferred that the probe information includes at least one of location information, acceleration information and moving direction information.

According to a tenth aspect of the present invention, in the server device of any one of the seventh through ninth aspects, it is preferred that the destination decision unit: calculates respective number of times of access by the driver and the fellow passenger or passengers to the respective pieces of the posted information; and identifies spots corresponding to pieces of the probe information whose calculated numbers of times of access are each equal to or greater than a predetermined value as the destination candidates.

According to an eleventh aspect of the present invention, in the server device of the tenth aspect, the destination decision unit may provide the driver with destination candidate information for displaying a list of the destination candidates with placing priority to a particular spot corresponding to a piece of the posted information whose number of times of access is maximal and those spots that are present in an area within a predetermined range from the particular spot among the spots identified as the destination candidates.

According to a twelfth aspect of the present invention, in the server device of any one of the seventh through eleventh aspects, it is preferred that the destination-circumjacent area information acquisition unit acquires, as the posted information concerning the destination, a piece of the posted information having location information of a spot that is present in an area within a predetermined range from the destination among the pieces of the posted information accessed by the driver or the fellow passenger or passengers.

An information terminal according to a thirteenth aspect of the present invention is to be connected to the server device of any one of the seventh through twelfth aspects and is configured to provide information based upon the destination-circumjacent area information transmitted from the destination-circumjacent area information acquisition unit to the driver or the fellow passenger or passengers.

According to the present invention, in case that a plurality of users take a car ride together toward a destination, it is possible to provide each of the users with appropriate information based upon the posted information that is accumulated in a server device in advance.

### BRIEF DESCRIPTION OF THE DRAWINGS

FIG. 1 presents a configuration diagram showing the information service system according to an embodiment of the present invention;
FIG. 2 presents a diagram illustrating an example of screen transition at each of a driver's terminal and a fellow passenger's terminal;
FIG. 3 presents an explanatory diagram illustrating a method of deciding a driver and one or more fellow passengers;
FIGS. 4A and 4B present a flowchart showing the flow of processing for deciding a driver and fellow passengers;
FIGS. 5A through 5E present explanatory diagrams illustrating a method of deciding a destination;
FIGS. 6A and 6B present a flowchart illustrating the flow of processing for deciding the destination;
FIGS. 7A through 7F present explanatory diagrams illustrating a method of acquiring destination-circumjacent area information;
FIGS. 8A and 8B present a flowchart illustrating the flow of processing for acquiring destination-circumjacent area information;
FIG. 9 presents a diagram showing an example of user information accumulated in a user information database;
FIG. 10 presents a diagram showing an example of facility information contained in map information accumulated in a map information database;
FIG. 11 presents a diagram showing an example of posted information accumulated in a posted information database; and
FIG. 12 presents a diagram showing an example of access history information accumulated in an access history information database.

### DESCRIPTION OF PREFERRED EMBODIMENTS

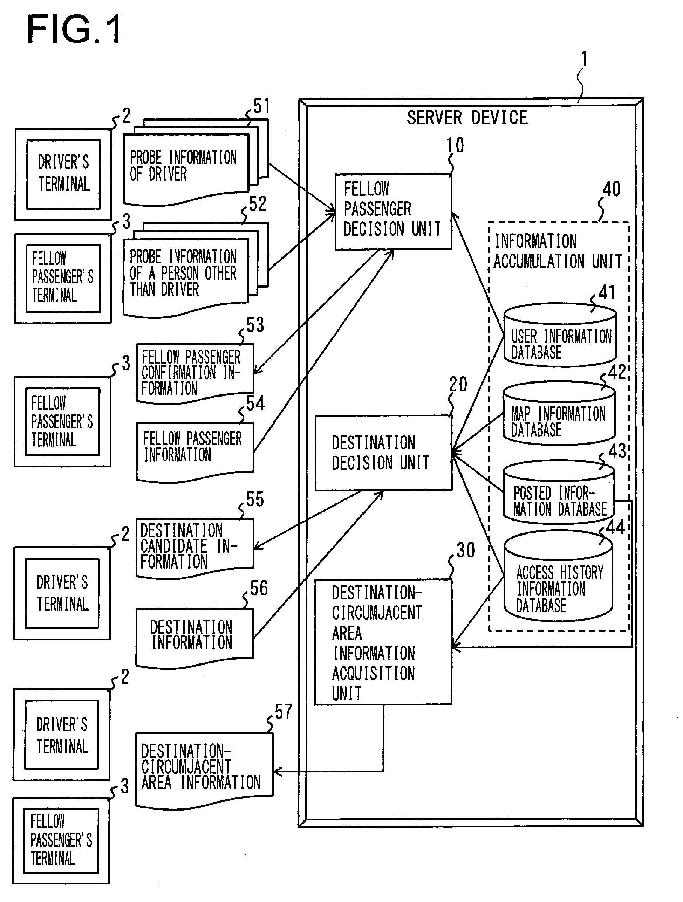

FIG. 1 presents a construction diagram showing an information service system according to an embodiment of the present invention. The information service system shown in FIG. 1 includes a server device 1, in which posted information containing location information has been accumulated in advance, a driver's terminal 2 carried by the driver of a vehicle, and a fellow passenger's terminal 3 carried by a fellow passenger who rides on the vehicle together with the driver. Note that in FIG. 1, a plurality of driver's terminals 2 and a plurality of fellow passenger's terminals 3 are depicted. This is to explain exchanges of various types of information between the server device 1 and the terminals in a manner easier to understand. In other words, each of icons representing the driver's terminals 2 in FIG. 1 represents one and the same terminal. Likewise, each of icons of the fellow passenger's terminals 3 in FIG. 1 represent one and the same terminal.

The driver's terminal 2 and the fellow passenger's terminal 3 each may be a portable information terminal, for instance, a smartphone or a tablet PC. Such information terminals, when they are brought in into the vehicle by the driver and the passenger, respectively, and a predetermined application is executed in that state in response to an operation by the driver or the fellow passenger, the information terminals are able to function as the driver's terminal 2 or the fellow passenger's terminal 3. Note that in case that there are present a plurality of fellow passengers, each of whom may carry his own terminal 3. That is, one or two or more fellow passengers may have his or their own terminal or terminals 3.

The server device 1 includes a fellow passenger decision unit 10, a destination decision unit 20, a destination-circumjacent area information acquisition unit 30 and an information accumulation unit 40.

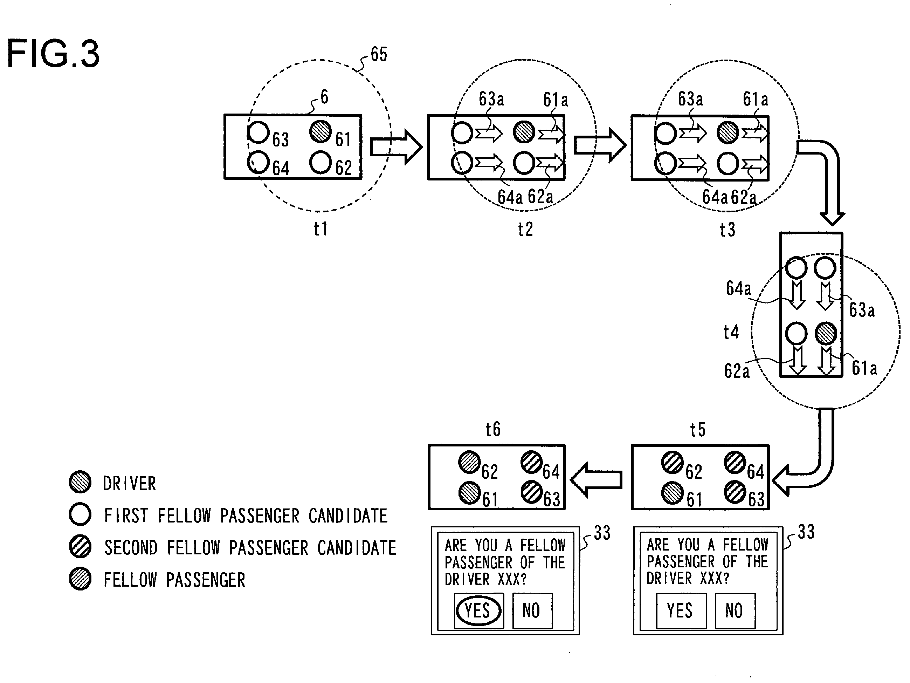

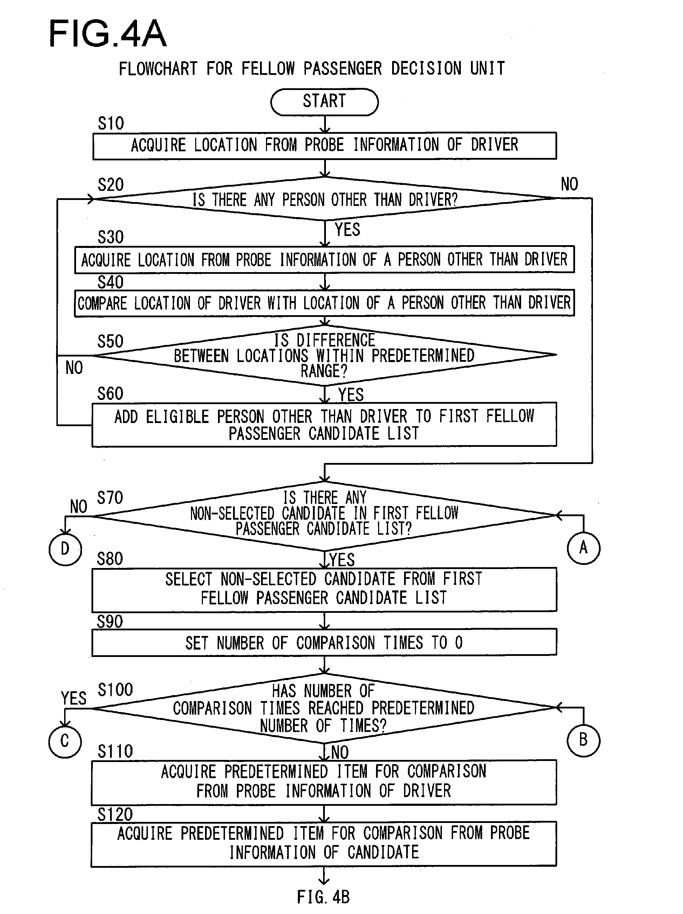

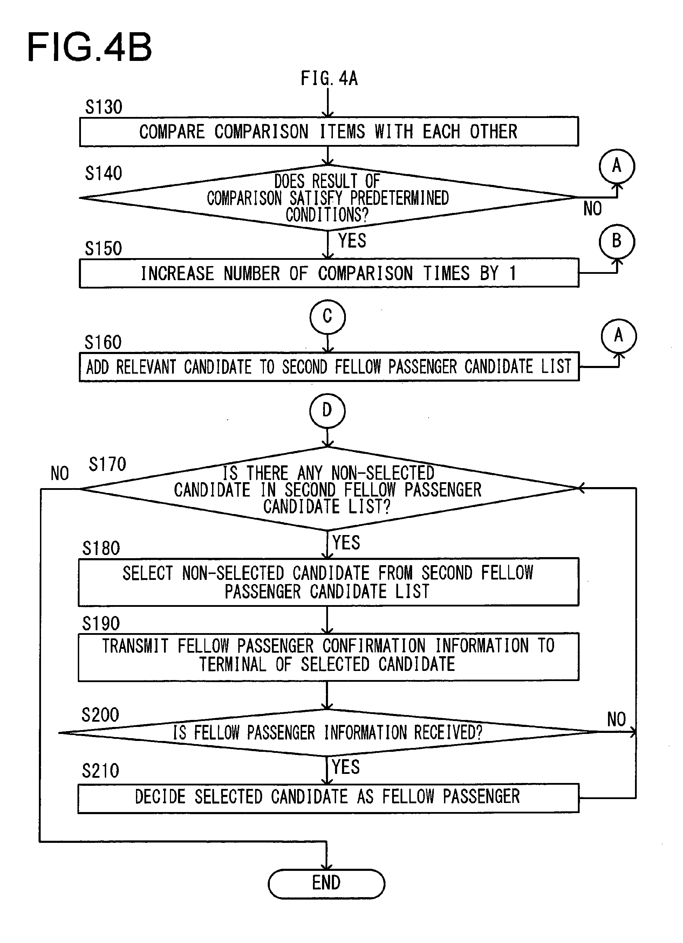

The fellow passenger decision unit 10 is a part that is configured to decide if a person on board in the vehicle is a driver or a fellow passenger. The decision by the fellow passenger decision unit 10 is achieved by a method that will be explained later referring to FIGS. 3, 4A and 4B based upon probe information 51 of the driver transmitted from the driver's terminal 2 carried by the driver at predetermined time intervals and probe information 52 of persons other than the driver transmitted from various information terminals inclusive of the fellow passenger's terminal 3 on the vehicle at predetermined time intervals.

Note that upon making a decision whether a user of an information terminal (hereafter, referred to simply as "user") is a fellow passenger on the vehicle, the fellow passenger decision unit 10 selects a user who is presumed to be a fellow passenger among the users other than the driver of the vehicle and specifies him as a candidate for the fellow passenger (hereafter, referred to as "fellow passenger candidate"). It then transmits fellow passenger confirmation information 53 for prompting confirmation of the fellow passenger candidate to the information terminal. When the user who is presumed to be a fellow passenger candidate confirms that he is a fellow passenger by performing a predetermined operation at the information terminal that received the confirmation information, fellow passenger information 54, which indicates the result of the confirmation, is transmitted from the information terminal of the user, that is, the fellow passenger's terminal 3 to the fellow passenger decision unit 10. Receipt of the fellow passenger information 54 enables the fellow passenger decision unit 10 to make a decision on a fellow passenger. Note that in FIG. 1, the information terminal of the fellow passenger candidate is indicated as the fellow passenger's terminal 3.

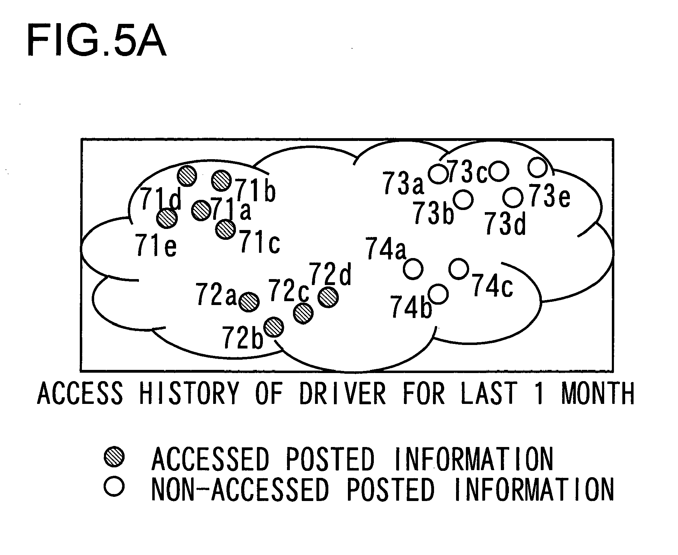

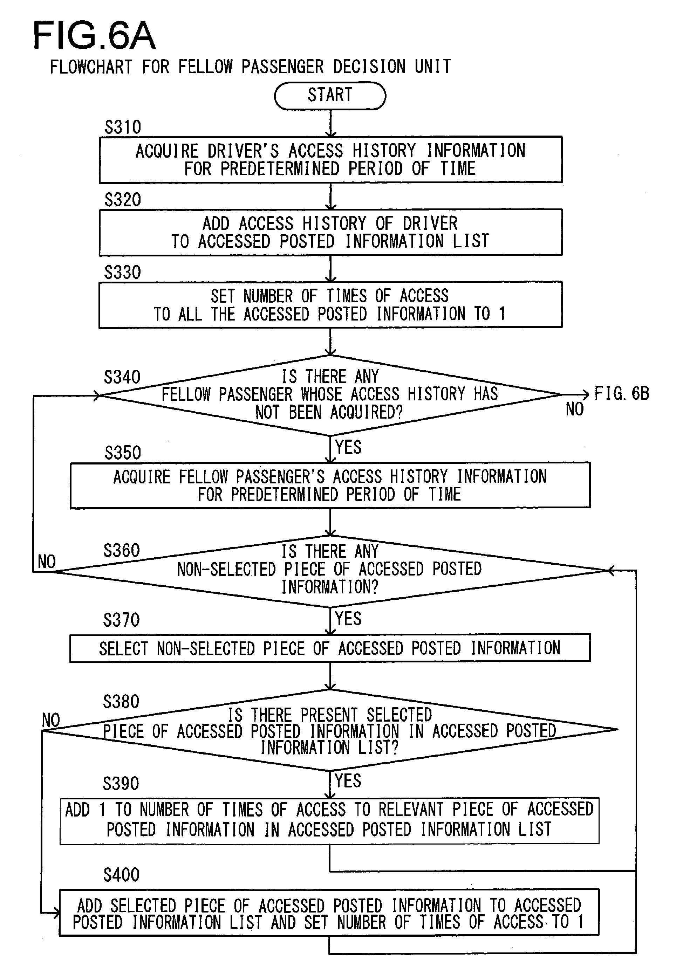

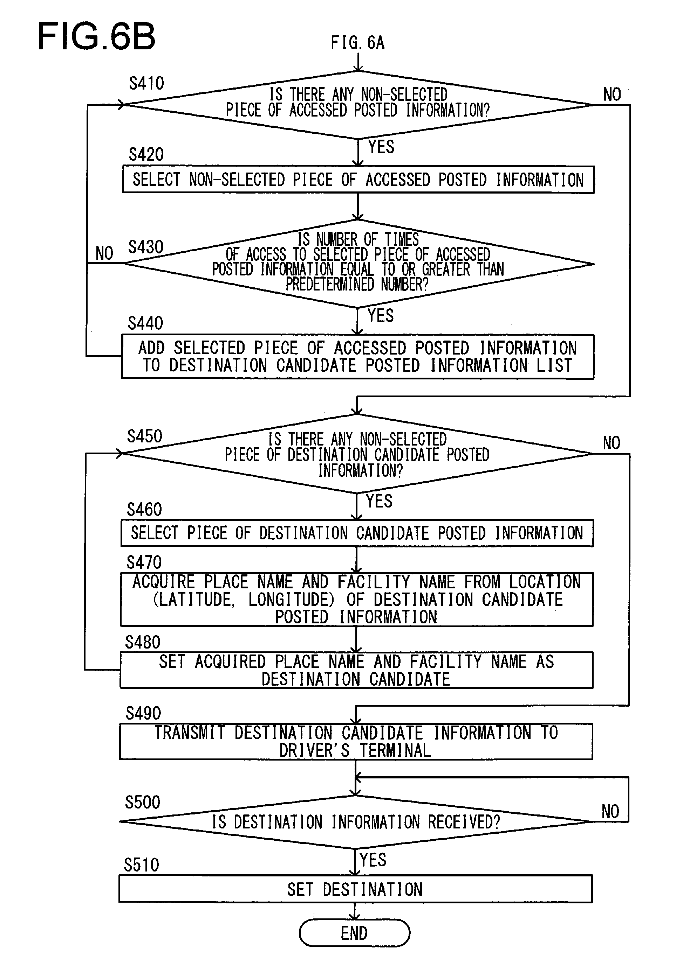

The destination decision unit 20 is a part to make a decision on the destination of the vehicle. The decision on the destination by the destination decision unit 20 is performed by specifying a candidate for a destination (hereafter, referred to as "destination candidate") by the method explained later with reference to FIGS. 5A through 5E, 6A and 6B. This is performed based upon respective histories of viewing (or access to) the posted information accumulated in the information accumulation unit 40 by the driver and the fellow passenger decided by the fellow passenger decision unit 10.

Once the destination candidates are specified, the destination decision unit 20 transmits destination candidate information 55 indicating the destination candidates to the driver's terminal 2. When the driver sets a destination at the driver's terminal 2 based upon the destination candidates indicated by the destination candidate information 55, destination information 56 indicating the destination is transmitted from the driver's terminal 2 to the destination decision unit 20. Receipt of the destination information 56 transmitted from the driver's terminal 2 enables the destination decision unit 20 to make a decision on the destination.

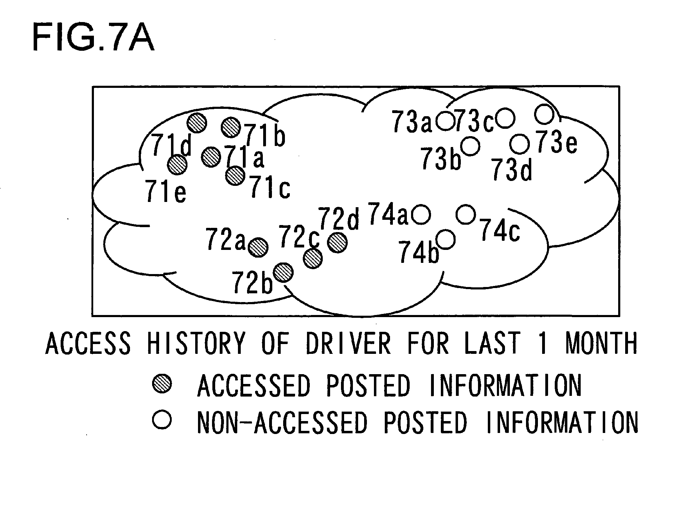

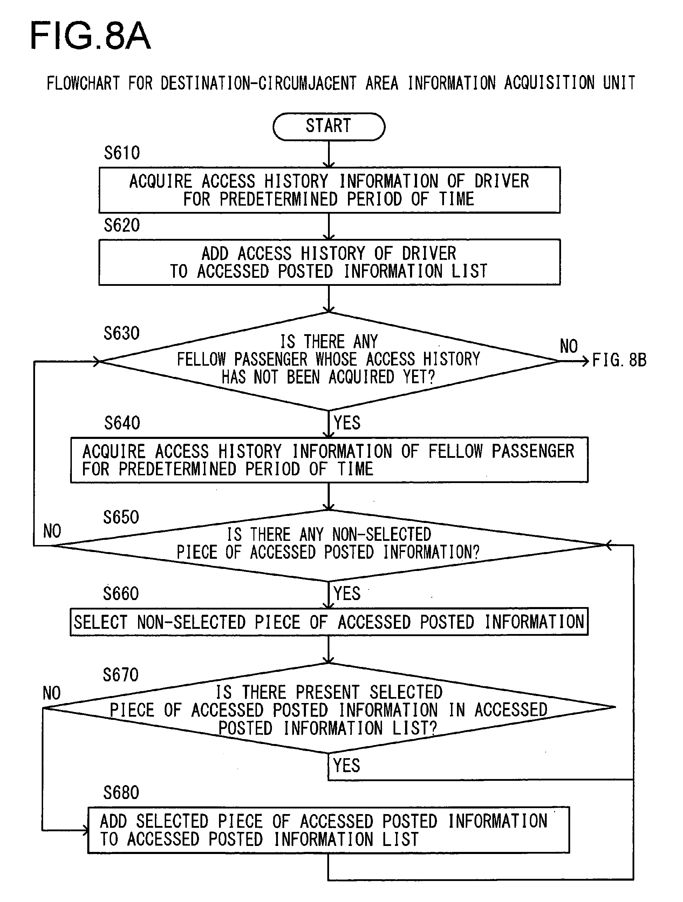

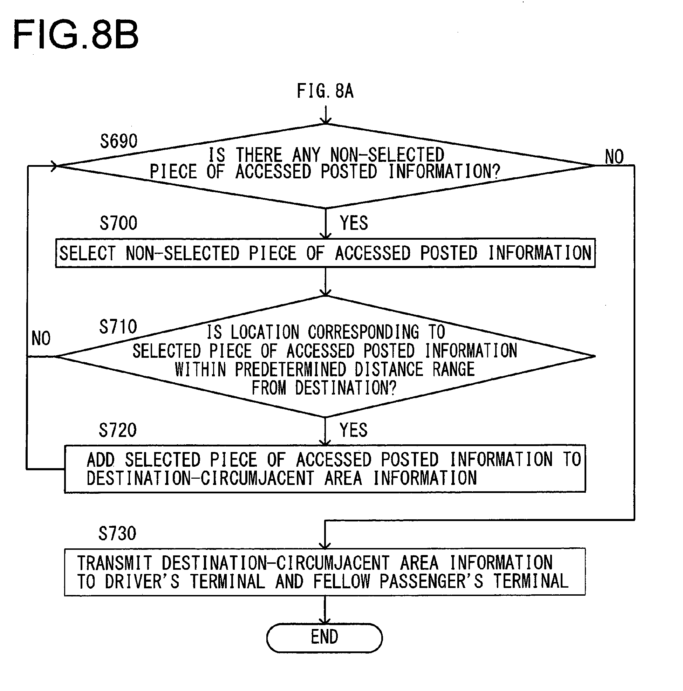

The destination-circumjacent area information acquisition unit 30 is a part that acquires posted information relative to the set destination from the information accumulation unit 40 and performs information service to the driver and the fellow passenger based upon the acquired posted information. The posted information may be acquired by the destination-circumjacent area information acquisition unit 30 according to the method explained later with reference to FIGS. 7A through 7F, 8A and 8B.

Once the posted information relative to the destination is acquired, the destination-circumjacent area information acquisition unit 30 transmits the acquired posted information to the driver's terminal 2 and the fellow passenger's terminal 3 as destination-circumjacent area information 57. As a result, information service to the driver and the fellow passenger is performed by the server device 1.

As shown in FIG. 1, the information accumulation unit 40 includes a user information database 41, a map information database 42, a posted information database 43 and an access history information database 44.

The user information database 41 is a database that accumulates information of each user to whom the information service system shown in FIG. 1 is available. The user information accumulated in the user information database 41 includes information about the driver who carries the driver's terminal 2 and information about the fellow passenger who carries the fellow passenger's terminal 3.

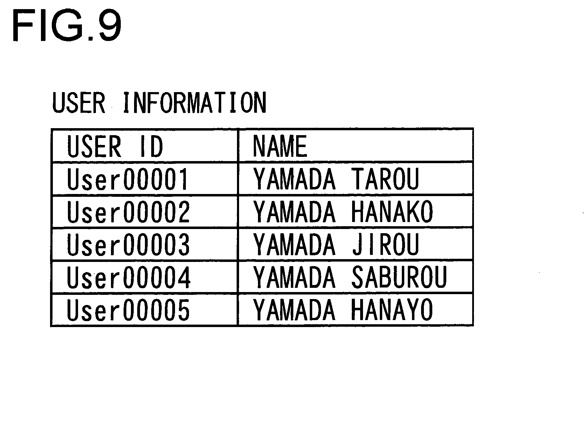

FIG. 9 presents a diagram showing an example of user information accumulated in the user information database 41. As shown in FIG. 9, for instance, user ID (identification) used for identifying each user and name of each user are accumulated as user information in the user information database 41. Note that information other than the above, for instance, information about sex, age, domicile, password, fee payment and so on may be accumulated as the user information.

The map information database 42 is a database that accumulates map information. The map information accumulated in the map information database 42 includes road information that indicates roads and facility information relating to various facilities and so on on the map.

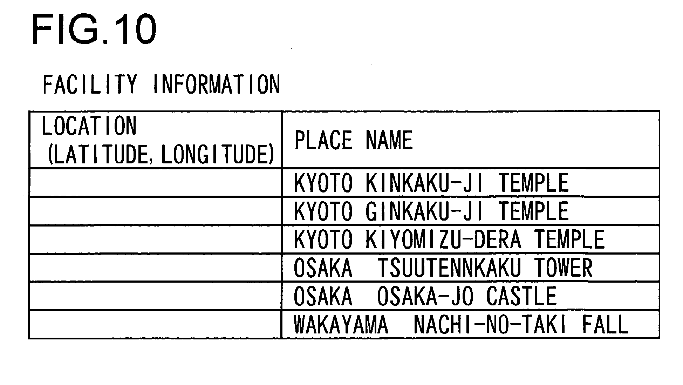

FIG. 10 presents a diagram showing an example of the facility information contained in map information accumulated in the map information database 42. As shown in FIG. 10, for instance, location (latitude, longitude) of each facility and name of facility (place name) on the map are accumulated as facility information in the map information database 42. Note that information other than the above may be included in the facility information.

The posted information database 43 is a database that accumulates various types of posted information posted by the user. Users who use the information service system shown in FIG. 1 may each operate their own information terminal they carry to correlate various types of information such as various types of messages, captured images, and voices with the location on the map at that moment and register the correlated information as posted information in the posted information database 43.

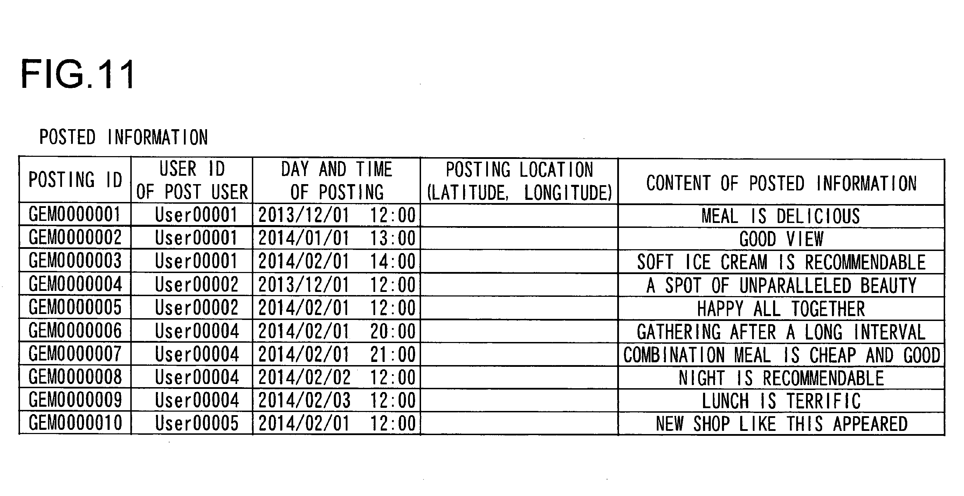

FIG. 11 presents a diagram showing an example of the posted information accumulated in the posted information database 43. As shown in FIG. 11, for instance, a posting ID for identifying each posted information, a user ID for identifying the user who posted each posted information, the date and time of posting, the latitude and longitude for identifying the location of posting, and the contents of posted messages are accumulated as posted information in the posted information database 43. Note that information other than the above, for instance, captured images and voices may be included in the posted information.

Note that it is preferred to adopt a configuration in which when accumulating the posted information in the posted information database 43, the user, who is a poster, is able to freely set whether or not access by a user other than the poster is to be allowed. In this case, a configuration may be adopted in which access is allowed to only those users who are designated by the poster or only for a period of time designated by the poster.

The access history information database 44 is a database that accumulates access history information of each user relative to the posted information accumulated in the posted information database 43. Each of the users who use the information service system shown in FIG. 1 can access only those pieces of the posted information posted by the other users for which access for viewing is allowed. When one user views the posted information of another user, access history information representing that access history is recorded in correlation to the one user in the access history information database 44.

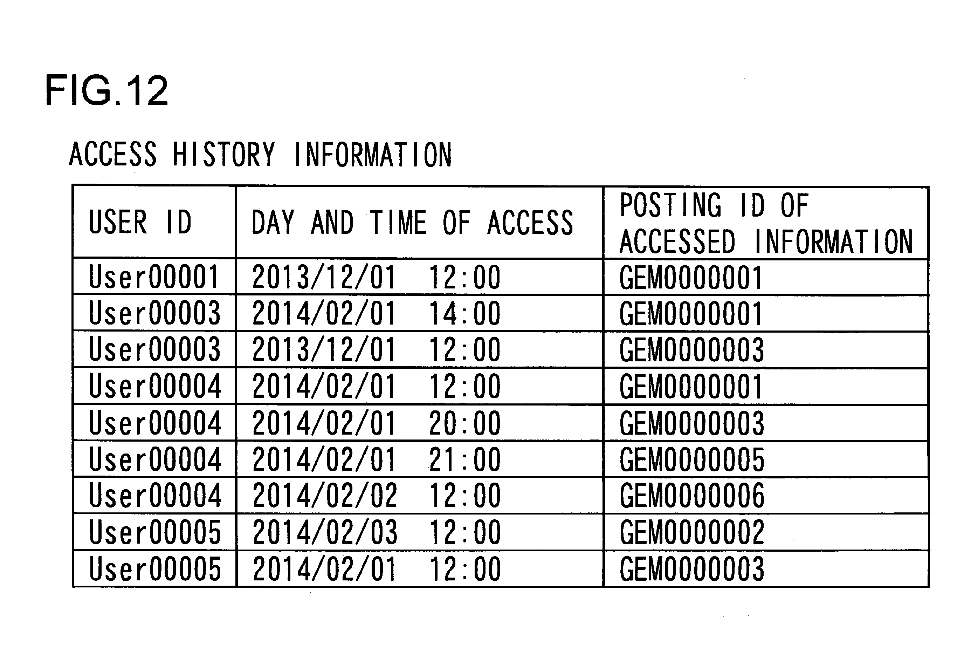

FIG. 12 presents a diagram showing an example of access history information accumulated in the access history information database 44. As shown in FIG. 12, for instance, a user ID for identifying the viewer (person who has made access), date and time of access, and a posting ID for identifying the posted information are accumulated as access history information in the access history information database 44. Note that information other than the above, for instance, number of times of access or the like may be included in the access history information.

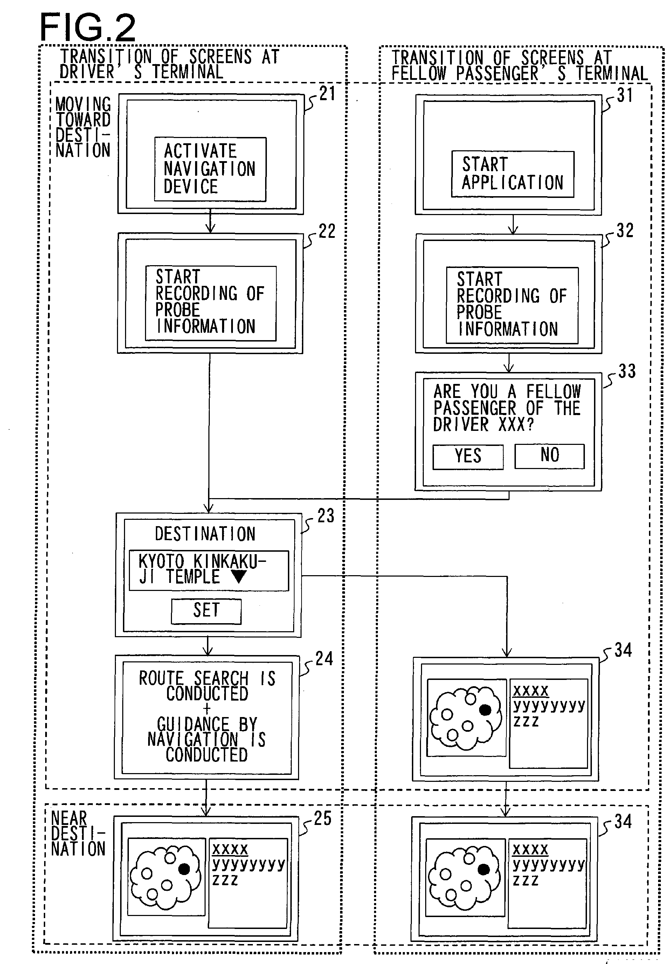

Next, explanation is made on the transition of screens when the information service system is used at the driver's terminal 2 and the fellow passenger's terminal 3. FIG. 2 shows an example of the transition of screens at each of the driver's terminal 2 and the fellow passenger's terminal 3.

When a user who is the driver of a vehicle and a user who is a fellow passenger get in the vehicle and a predetermined application is executed at the driver's terminal 2 and fellow passenger's terminal 3, a screen 21 is displayed at the driver's terminal 2 and a screen 31 is displayed at the fellow passenger's terminal 3.

Selection of the operating button labeled "ACTIVATE NAVIGATION DEVICE" by the driver at the screen 21 causes a screen 22 to be displayed and recording of probe information is started at the driver's terminal 2. On the other hand, selection by the fellow passenger of the operating button labeled "START APPLICATION" at the screen 31 causes a screen 32 to be displayed and recording of the probe information to be started at the fellow passenger's terminal 3. The probe information recorded by the driver's terminal 2 and that recorded by the fellow passenger's terminal 3 are transmitted to the fellow passenger decision unit 10 of the server device 1 at predetermined time intervals.

The probe information transmitted from the driver's terminal 2 and that transmitted from the fellow passenger's terminal 3 include each location information, acceleration information, moving direction information and so on. In order to acquire these pieces of probe information, the driver's terminal 2 and the fellow passenger's terminal 3 have each built-in a GPS sensor that detects the current location of the vehicle by receiving GPS signals, an acceleration sensor that detects acceleration, a gyro sensor that detects a direction of movement, and so on.

When the user who is a fellow passenger is decided to be a fellow passenger candidate by the fellow passenger decision unit 10, fellow passenger confirmation information 53 is transmitted from the fellow passenger decision unit 10 to the fellow passenger's terminal 3, as explained in FIG. 1. The fellow passenger confirmation information 53 includes information identifying the driver. When the fellow passenger's terminal 3 receives the fellow passenger confirmation information 53, the information about the driver together with a screen 33 for confirming whether or not the recipient is a fellow passenger is displayed at the fellow passenger's terminal 3.

Once the user who is a fellow passenger selects an operating button labeled "YES" or an operating button labeled "NO" on the screen 33, the fellow passenger information 54 corresponding to the result of the selection is transmitted from the fellow passenger's terminal 3 to the fellow passenger decision unit 10 as shown in FIG. 1. Here, explanation will be made assuming that the operating button labeled "YES" indicating that the user is a fellow passenger is selected at the fellow passenger's terminal 3.

The result of the decision by the fellow passenger decision unit 10 as to whether or not the user is the driver or the fellow passenger is transmitted from the fellow passenger decision unit 10 to the destination decision unit 20. Based upon this result, the destination decision unit 20 is able to identify the driver and the fellow passenger, and thereby it can identify destination candidates.

Once the destination candidates are identified by the destination decision unit 20, the destination candidate information 55 is transmitted from the destination decision unit 20 to the driver's terminal 2 as explained in FIG. 1. When the destination candidate information 55 is received, a screen 23 for use in selecting a destination among the destination candidates is displayed at the driver's terminal 2 as shown in FIG. 1.

When the driver selects at the screen 23 any particular destination candidate and selects the operating button labeled "SET", the selected destination candidate is set as the destination. The destination information 56 indicating the destination is transmitted from the driver's terminal 2 to the destination decision unit 20. Thereafter, a screen 24 is displayed at the driver's terminal 2 and route search and guide for the destination are started at the driver's terminal 2. This enables the driver to start driving the vehicle toward the destination.

In addition, the result of the setting of the destination by the driver is transmitted from the destination decision unit 20 to the destination-circumjacent area information acquisition unit 30. Based upon the result of the setting of the destination, the destination-circumjacent area information acquisition unit 30 acquires posted information relative to the destination from the information accumulation unit 40 to provide information to both of the driver and the fellow passenger.

When the posted information concerning the destination is acquired by the destination-circumjacent area information acquisition unit 30, the destination-circumjacent area information 57 is transmitted from the destination-circumjacent area information acquisition unit 30 to the driver's terminal 2 and the fellow passenger's terminal 3 as explained in FIG. 1. When the destination-circumjacent area information 57 is received, a screen 34 for providing information concerning destination to the fellow passenger is displayed.

When the vehicle arrives near the destination and the driver stops driving the vehicle, a screen 25 for providing information concerning the destination to the driver is displayed at the driver's terminal 2 in the same manner as that in which the screen 34 is displayed at the fellow passenger's terminal 3. On the other hand, at the fellow passenger's terminal 3, the screen 34 is continued to be displayed there on. As a result, the information relative to the destination is shared between the driver and the fellow passenger.

Next, the method of deciding a driver and one or more fellow passengers by the fellow passenger decision unit 10 is explained. FIG. 3 presents an explanatory diagram illustrating the method of making a decision on a driver and one or more fellow passengers.

It is assumed that as shown in FIG. 3, there are present a user 61 who is the driver and users 62, 63 and 64 other than the driver within the vehicle 6 at time t1. Also, it is assumed that at the information terminal of the user 61, a predetermined operation indicating that the user 61 is the driver, for instance, the operation that has been explained with regard to the screen 21 shown in FIG.2 is performed. On this occasion, the fellow passenger decision unit 10 recognizes that the user 61 is the driver and specifies the location of the driver 61 based upon probe information transmitted from the driver's terminal 2 carried by the driver 61 (hereafter, referred to as "driver probe information").

Once the location of the driver 61 is specified, the fellow passenger decision unit 10 next sets a fellow passenger decision area 65 for making a decision on a fellow passenger within a predetermined distance range from the location of the driver 61 as a reference, for instance, in a circular area at a distance in the range of 2 m or less in radius from the reference. Based on the probe information transmitted from the respective information terminals of the users 62 through 64 (hereafter, referred to as "fellow passenger probe information"), the users 62 through 64 who are present within the fellow passenger decision area 65 are identified and each of them is set to be a first fellow passenger candidate.

Next, at time t2, which is later than the time t1 by a predetermined period of time, the fellow passenger decision unit 10 compares the driver probe information with the fellow passenger probe information from each of the information terminals of the users 62 through 64. Specifically, the location, acceleration and moving direction of each of the fellow passenger probe information are compared with those of the driver probe information, respectively, to find differences, if any, between the two types of information. If the differences in the location, acceleration and moving direction between the two types of information are all within respective predetermined amounts, such fellow probe information is specified. Note that in FIG. 3, the magnitude of acceleration and the moving direction represented by each piece of the probe information is indicated by arrows 61 a through 64a. Thereafter, the same processing is performed at times t3 and t4, respectively.

It is assumed that in the processing performed at times t2 through t4 as explained above, the location, acceleration and moving direction of each pieces of fellow passenger probe information are within the respective predetermined ranges from those of the driver probe information. In this case, at next time t5, the fellow passenger decision unit 10 sets the users 62 through 64 who were set as the first fellow passenger candidates to be second fellow passenger candidates, respectively. Then, it transmits the fellow passenger confirmation information 53 as shown in FIG. 1 to the respective information terminals of the users 62 through 64. With these measures, as explained in FIG. 2, the screen 33 for confirming that the corresponding user is a fellow passenger is displayed at the respective information terminals of the users 62 through 64.

It is assumed that thereafter, at time t6, the user 62 has selected the operating button labeled "YES" at the screen 33 to confirm that he is a fellow passenger. In this case, upon receipt of the fellow passenger information 54 shown in FIG. 1 transmitted from the information terminal of the user 62, the fellow passenger decision unit 10 decides that the user 62 from among the users 62 through 64 who have been set as second fellow passenger candidates is a fellow passenger. Note that the same is true for the remaining users 63 and 64.

As explained earlier, the fellow passenger decision unit 10 acquires the probe information from each of a plurality of persons inclusive of the driver, and compares the acquired probe information of the driver with the acquired probe information of each of the persons other than the driver at every predetermined cycles. If it is shown as a result of the comparison that a difference between each item of the probe information of the driver and that of the probe information of each of the persons fall in the predetermined range consecutive predetermined times (for instance, 3 times), then the fellow passenger decision unit 10 sets the persons as second fellow passenger candidates. Among such second fellow passenger candidates, one who is confirmed to be a fellow passenger is decided as a fellow passenger. By this method, decision of the driver and the fellow passenger can be made at the fellow passenger decision unit 10.

Note that in the method of making a decision on a driver and one or more fellow passengers as described above, the persons whose probe information shows a difference from the probe information of the driver which is within the predetermined range consecutive predetermined times are set to be second fellow passenger candidates and a person among them who is confirmed to be a fellow passenger is decided as the fellow passenger. However, the setting of the second fellow passenger candidates and confirmation of the fellow passenger may be omitted. That is, the person whose probe information shows a difference from the probe information of the driver which is within the predetermined range consecutive predetermined times may be decided as the fellow passenger as is without confirmation from him.

In addition, the content of the probe information that is selected as a target for comparison at times t2 through t4 is not limited to the location, acceleration and moving direction described above. For instance, only any particular one item among them may be compared. Also, other information may be included in the probe information to acquire a target for comparison. That is, any one item of various types of information that are included in both the driver probe information and the fellow passenger probe information may be used as the target for comparison to set the second fellow passenger candidates.

FIGS. 4A and 4B present a flowchart illustrating the flow of processing for deciding the driver and the fellow passenger by the fellow passenger decision unit 10 as described above. The processing shown in the flowchart is executed at every predetermined number of cycles at the fellow passenger decision unit 10.

In step S10, the fellow passenger decision unit 10 acquires location information that represents the location of the driver of the vehicle from the various types of information included in the probe information transmitted from the driver's terminal 2.

In step S20, the fellow passenger decision unit 10 decides whether or not there is present a user or person other than the driver referring to the user information database 41. If a user other than the driver is present, the process proceeds to step S30. If, on the other hand, such is not present, the process proceeds to step S70. On this occasion, the decision may be made covering only nearby users near the driver.

In step S30, the fellow passenger decision unit 10 acquires location information that represents the location of the user from among various types of information included in the probe information transmitted from the information terminal of the user other than the driver decided in step S20.

In step S40, the fellow passenger decision unit 10 compares the location of the driver with the location of the user other than the driver based upon the location information acquired in step S10 and that acquired in step S30.

In step S50, the fellow passenger decision unit 10 decides whether or not the difference in location compared in step S40 is within the predetermined range. If the difference in location is within the predetermined range, that is, if there is a user other than the driver within the fellow passenger decision area 65 as illustrated in FIG. 3, the process proceeds to step S60. If on the other hand, the difference in location exceeds the predetermined range, the process returns to step S20.

In step S60, the fellow passenger decision unit 10 adds the user for whom it has been decided that the difference in location from that of the driver is within the predetermined range in step S50 into the list of the first fellow passenger candidates to register the user concerned as a first fellow passenger candidate. This list is to indicate which one of the users has been set for the driver whose location is acquired in step S10 as a first fellow passenger candidate as illustrated in FIG. 3. After the processing in step S60 is executed, the process returns to step S20.

If the process returns from step S50 or S60 to step S20, the fellow passenger decision unit 10 repeats the processing in steps S20 to S60 to the other users to whom the processing has not been executed yet. When the processing is executed to all the users other than the driver, a negative decision is made in step S20 and the process proceeds to step S70.

In step S70, the fellow passenger decision unit 10 decides whether or not a non-selected first fellow passenger candidate who is not selected in next step S80 is present among the first fellow passenger candidates registered in the first fellow passenger candidate list described above. If there is present such a non-selected first fellow passenger candidate, the process proceeds to step S80. If, on the other hand, there is no such non-selected first fellow passenger candidate, that is, all the first fellow passenger candidates have already been selected, the process proceeds to step S170.

In step S80, the fellow passenger decision unit 10 selects any one of the non-selected first fellow passenger candidates among the first fellow passenger candidates registered in the first fellow passenger candidate list.

In step S90, the fellow passenger decision unit 10 selects 0 as an initial value of comparison time for the first fellow passenger candidate selected in step S80.

In step S100, the fellow passenger decision unit 10 decides whether or not the comparison time for the first fellow passenger candidate selected in step S80 has reached a predetermined number of times. If the comparison time has reached the predetermined number of times, for instance 3 times, the process proceeds to step S160. If not, the process proceeds to step S110.

In step S 110, the fellow passenger decision unit 10 acquires information representing predetermined items for comparison among the various types of information included in the probe information transmitted from the driver's terminal 2. Here, for instance, information about the location, acceleration and moving direction of the driver are acquired.

In step S120, the fellow passenger decision unit 10 acquires information representing predetermined items for comparison among the various types of information included in the probe information transmitted from the information terminal of the first fellow passenger candidate selected in step S80 in the same manner as that in step S110. Here, for instance, the location, acceleration and moving direction of the user are acquired.

In step S130, the fellow passenger decision unit 10 compares the items for comparison relative to the driver with those relative to the user other than the driver based upon the information acquired in step S110 and that acquired in step S120.

In step S140, the fellow passenger decision unit 10 decides whether or not the result of the comparison in step S130 satisfies a predetermined condition. If the result of comparison satisfies the predetermined condition, for instance, if respective differences in items of comparison are respective predetermined ranges, the process proceeds to step S150. If, on the other hand, the result of comparison does not satisfy the predetermined condition, the process returns to step S70.

In step S150, the fellow passenger decision unit 10 increases the number of comparison times by 1 for the first fellow passenger candidate selected in step S80 and the process returns to step S100.

In step S160, the fellow passenger decision unit 10 adds the user, for whom it is decided that the number of comparison times has reached the predetermined number of times in step S100, to the list of the second fellow passenger candidates to have the user registered as the second fellow passenger candidate. This list is to indicate which user has been set for the driver whose location has been acquired in step S10 as the second fellow passenger candidate explained in FIG. 3. After the processing in step S160 is executed, the process returns to step S70.

When the process returns from step S140 or S160 to step S70, the fellow passenger decision unit 10 repeats the processing in each of step S70 and subsequent steps. With these measures, the first fellow passenger candidates registered in the first fellow passenger candidate list are selected in order and the above-described processing is executed to each of them. When the processing is executed to all the first fellow passenger candidates, a negative decision is made in step S70 and the process proceeds to step S170.

In step S170, the fellow passenger decision unit 10 decides whether or not there is present a second fellow passenger candidate who is not selected in next step S180 among the second fellow passenger candidates registered in the second fellow passenger candidate list. If such is present, the process proceeds to step S180. If not, that is, if all the second fellow passenger candidates have already been selected, the processing shown in the flowchart in FIGS. 4A and 4B is terminated.

In step S180, the fellow passenger decision unit 10 selects any one of non-selected second fellow passenger candidate not selected among the second fellow passenger candidates registered in the second fellow passenger candidate list.

In step S190, the fellow passenger decision unit 10 transmits the fellow passenger confirmation information 53 to the information terminal of the second fellow passenger candidate selected in step S180 as shown in FIG. 1.

In step S200, the fellow passenger decision unit 10 decides whether or not the fellow passenger information 54 indicating the result of confirmation that the user is identified as a fellow passenger is received from the information terminal in response to the fellow passenger confirmation information 53 transmitted in step S190. If the fellow passenger information 54 is received, the process proceeds to step S210. If not, the process returns to step S170.

In step S210, the fellow passenger decision unit 10 decides that the second fellow passenger candidate selected in step S180 as the fellow passenger and the process returns to step S170.

When the process returns from step S200 or S210 to step S170, the fellow passenger decision unit 10 executes the processing in each of step S170 and subsequent steps repeatedly. With these measures, the second fellow passenger candidates registered in the second fellow passenger candidate list are selected in order and the above-described processing is executed to each of them. When the processing is executed to all the second fellow passenger candidates, a negative decision is made in step S170 and the processing shown in the flowchart in FIGS. 4A and 4B is terminated.

The fellow passenger decision unit 10 is able to make a decision on a driver and a fellow passenger by the processing explained earlier. Note that the result of decision about the driver and the fellow passenger by the fellow passenger decision unit 10 is notified from the fellow passenger decision unit 10 to the destination decision unit 20.

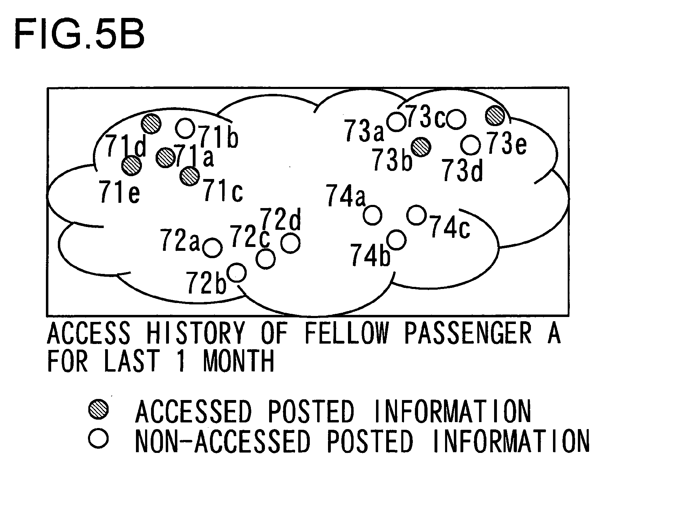

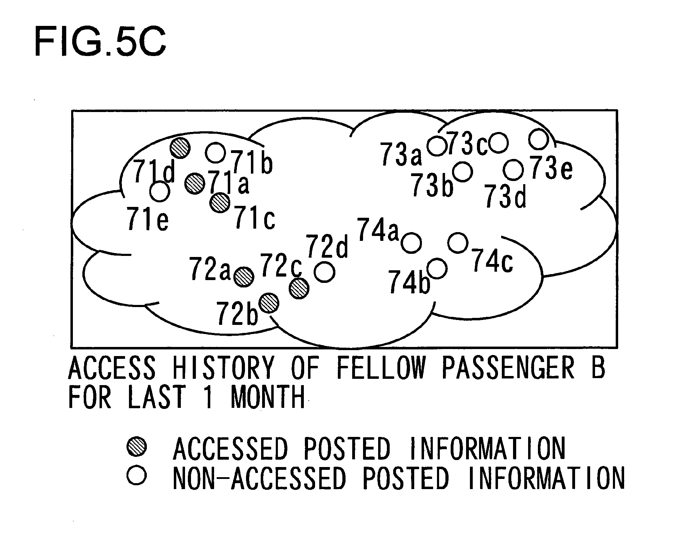

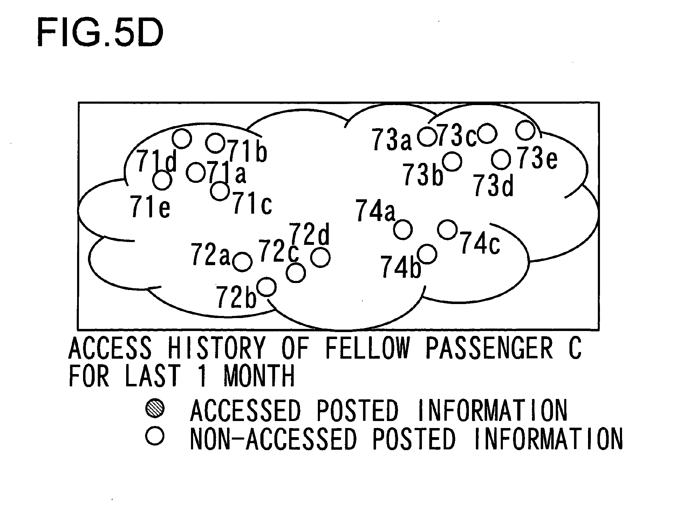

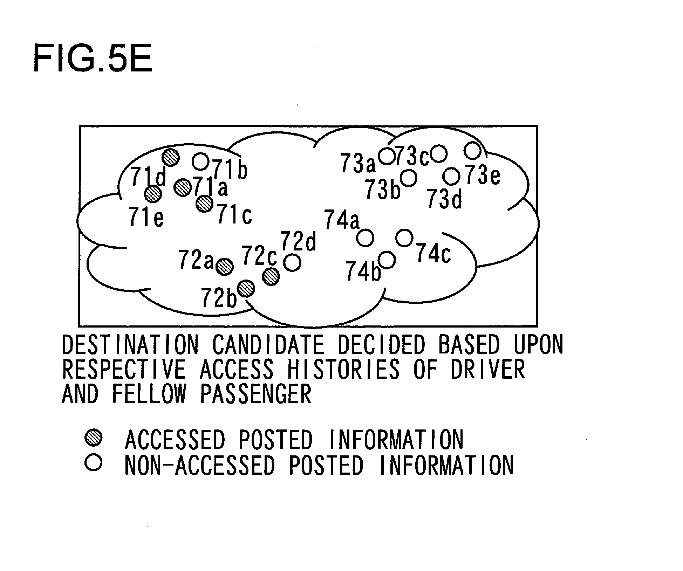

Next, the method of deciding a destination by the destination decision unit 20 is explained. FIG. 5 presents an explanatory diagram illustrating the method of making a decision on a destination. Here, an example in which a driver and three fellow passengers (say, fellow passengers A, B and C) are aboard on the same vehicle is explained.

FIGS. 5A through 5D exemplify access histories of the posted information by the driver and the fellow passengers A, B and C, respectively. It is assumed that as shown in FIG. 5A, the driver accessed, among the pieces of posted information 71a through 71e, 72a through 72d, 73a through 73e and 74a through 74c, those pieces of posted information shown with shading, i.e., 71a through 71e and 72a through 72d for a predetermined period of time in past, for example within 1 month. In addition, it is assumed that as shown in FIGS. 5B and 5C, the fellow passenger A accessed the pieces of posted information 71a, 71c through 71e, 73b and 73e, and the fellow passenger B accessed the pieces of posted information 71 a, 71 c, 71 d and 72a through 72c within the predetermined period of time in past. It is further assumed that as shown in FIG. 5D, the fellow passenger C accessed none of the pieces of posted information within the predetermined period of time in past.

The destination decision unit 20 calculates the number of times of access to each piece of posted information by the driver and the fellow passengers A through C based upon respective histories of viewing or access by the driver and the fellow passengers A through C. Specifically, for each pieces of the posted information, the number of times of access is calculated by acquiring the total number of users, among the driver and the fellow passengers A through C, who have accessed the posted information within the predetermined period of time described above. In this case, the calculation of the total number of users may be weighted corresponding to attribute or the number of times of access of each user. For instance, weighting may be achieved in calculation of the number of times of access by varying an additional value to be added to the number of times of access between the case where the driver accessed it and the case where one of the fellow passengers A through C accessed it or by setting a greater additional value as the number of times of access increases.

When the number of times of access is calculated for each piece of posted information, the destination decision unit 20 judges the posted information which shows a number of times of access having a value equal to or greater than a predetermined value, for instance, a value acquired by dividing the total number of the driver and the fellow passengers by 2 (that is, 2 in the above described example) to be the posted information representing a destination candidate. As a result, as shown in FIG. 5E, the pieces of posted information 71a, 71c through 71e, and 72a through 72c are judged to be the posted information representing destination candidates. When the posted information representing the destination candidates is judged in this manner, the destination decision unit 20 specifies the place name and facility name of each spot corresponding thereto from the map information to thereby set the destination candidates.

Once the destination candidates are set, the destination decision unit 20 transmits the destination candidate information 55 illustrated in FIG. 1 to the driver's terminal 2. With this measure, as illustrated in FIG. 2, the screen 23 for selecting the destination is displayed at the driver's terminal 2. Thereafter, when the driver selects a destination among the candidates for destination, the destination information 56 illustrated in FIG. 1 is transmitted from the driver's terminal 2. Receipt of the destination information 56 enables the destination decision unit 20 to set the destination of the vehicle.

As explained earlier, the destination decision unit 20 calculates the number of times of access to each piece of posted information by the driver and the fellow passengers. It specifies each spot corresponding to each of the piece of posted information that shows the calculated number of times of access equal to or greater than a predetermined value to be a destination candidate for setting the destination. In such a manner, the decision of the destination can be performed at the destination decision unit 20.

FIGS. 6A and 6B present a flowchart illustrating the flow of processing for deciding a destination by the destination decision unit 20. The processing shown in the flowchart is executed at the destination decision unit 20 when the driver and the fellow passengers are decided by the fellow passenger decision unit 10.

In step S310, the destination decision unit 20 acquires access history information concerning the posted information accessed by the driver within a predetermined period of time from the access history information database 44.

In step S320, the destination decision unit 20 adds the access history of the driver to a list of accessed posted information based upon the access history information acquired in step S310. This list is to indicate which pieces of the posted information have already been accessed by the driver and the fellow passengers within the predetermined period of time. With this measure, each of the pieces of the posted information that have already been accessed by the driver within the predetermined period of time is registered in the accessed posted information list.

In step S330, the destination decision unit 20 sets the number of times of access to 1 for all the pieces of the posted information listed in the accessed posted information list. In this case, in the accessed posted information list, each of the pieces of the posted information accessed by the driver within the predetermined period of time is registered in step S320. Therefore, by the processing in step S330, the number of times of access for each of the pieces of the posted information that has already been accessed by the driver is set to 1.

In step S340, the destination decision unit 20 makes a decision as to whether or not there is present any fellow passenger whose access history information is untaken in next step S350 among the fellow passengers notified from the fellow passenger decision unit 10. If there is any fellow passenger whose access history information has been untaken, the process proceeds to step S350. If such a fellow passenger is absent, that is, if the access history information has been acquired for all the fellow passengers, the process proceeds to step S410.

In step S350, the destination decision unit 20 selects any particular one from the fellow passengers whose access history information has been untaken and acquires the access history information concerning the posted information accessed by the selected particular fellow passenger within the predetermined period of time from the access history information database 44.

In step S360, the destination decision unit 20, based upon the access history information of the fellow passenger acquired in step 350, decides whether or not there is present among the pieces of the posted information accessed by the fellow passenger any piece of accessed posted information that is not selected in next step S370. If there is present such a non-selected piece of accessed posted information, the process proceeds to step S370. If such a non-selected piece of accessed posted information is absent, that is, if all the pieces of posted information accessed by the fellow passenger have already been selected, the process returns to step S340.

In step S370, the destination decision unit 20 selects any one of the non-selected pieces of the accessed posted information among the pieces of posted information accessed by the fellow passenger represented by the access history information acquired in step S350.

In step S380, the destination decision unit 20 decides whether or not there is present the piece of the accessed posted information selected in step S370 in the pieces of accessed posted information registered in the accessed posted information list. If such a piece of the accessed posted information is present, the process proceeds to step S390. If not, the process proceeds to step S400.

In step S390, the destination decision unit 20 adds 1 to the number of times of access to the corresponding item in the accessed posted information list. That is, it specifies where in the accessed posted information list, the piece of the accessed posted information selected in step S370 is registered. Then it adds 1 to the number of times of access to the piece of the accessed posted information thus specified. After the processing in step S390 is executed, the process returns to step S360.

In step S400, the destination decision unit 20 adds the piece of the accessed posted information selected in step S370 to the accessed posted information list and adds 1 to the number of times of access thereto. After the processing of step S400 is executed, the process returns to step S360.

When the process returns to step S360 from step S390 or S400, the destination decision unit 20 executes the processing in each of step S360 and subsequent steps repeatedly. With these measures, the pieces of the posted information accessed by the fellow passenger represented by the access history information of the fellow passenger acquired in step S350 are selected in order. Then, the above-described processing is executed for each of them. When the processing is executed for all the posted information accessed by the passenger, a negative decision is made in step S360 and the process returns to step S340.

In addition, when the process returns from step S360 to step S340, the destination decision unit 20 executes the processing in step S340 and thereafter repeatedly. With these measures, it acquires the access history information of each of the fellow passengers in order and the above-mentioned processing in each of the steps is executed. When the accessed posted information is acquired for all the fellow passengers, a negative decision is made in step S340 and the process proceeds to step S410.

In step S410, the destination decision unit 20 decides whether or not there is present any piece of accessed posted information that is not selected in next step S420 among the pieces of the accessed posted information registered in the accessed posted information list. If there is present such a non-selected piece of the accessed posted information, the process proceeds to step S420. If not, that is, all the pieces of the accessed posted information registered in the accessed posted information list have already been selected, the process proceeds to step S450.

In step S420, the destination decision unit 20 selects any one of the non-selected pieces of the accessed posted information among the pieces of the accessed posted information registered in the accessed posted information list.

In step S430, the destination decision unit 20 decides whether or not the number of times of access to the piece of accessed posted information selected in step S420 is equal to or greater than a predetermined number, for instance 2 or more. If it is equal to or greater than the predetermined number, the process proceeds to step S440. If it is smaller than the predetermined number, the process returns to step S410.

In step S440, the destination decision unit 20 adds the piece of the accessed posted information selected in step S420 to a destination candidate posted information list. This list is to represent pieces of the posted information corresponding to destination candidates. With these measures, the pieces of the posted information showing the number of times of access equal to or greater than the predetermined number are registered in the destination candidate posted information list as the destination candidate posted information corresponding to the destination candidates. After the processing in step S440 is executed, the process returns step S410.

When the process returns from step S430 or S440 to step S410, the destination decision unit 20 executes the processing in each of steps S410 through S440 repeatedly. With these measures, it selects the pieces of the accessed posted information registered in the accessed posted information list in order and executes the processing in each of the steps as described above. When the processing for all the pieces of the accessed posted information is executed, a negative decision is made in step S410 and the process returns to step S450.

In step S450, the destination decision unit 20 decides whether or not there is present any piece of the destination candidate posted information that is not selected in next step S460 among the pieces of the destination candidate posted information registered in the destination candidate posted information list. If such a non-selected piece of the destination candidate posted information is present, the process proceeds to step S460. If not, that is, if all the pieces of the destination candidate posted information registered in the destination candidate posted information list have already been selected, the process proceeds to step S490.

In step S460, the destination decision unit 20 selects any particular one of the non-selected pieces of the destination candidate posted information among the pieces of the destination candidate posted information registered in the destination candidate posted information list.

In step S470, with reference to the map information database 42 and the posted information database 43, the destination decision unit 20 acquires the place name and facility name of each spot corresponding to the piece of the posted information based upon the location of the destination candidate posted information selected in step S460. Specifically, the location of the selected piece of the destination candidate posted information is acquired from the posted information database 43 and the place name and facility name corresponding to the location are acquired from the map information database 42.

In step S480, the destination decision unit 20 sets the place name and facility name acquired in step S470 as the destination candidate. After the processing in step S480 is executed, the process returns to step S450.

When the process returns from step S480 to step S450, the destination decision unit 20 repeats the processing in each of steps S450 through S480. With these measures, the pieces of the destination candidate posted information registered in the destination candidate posted information list are selected in order and the above-described processing in each of the steps is executed to set the destination candidates. When the processing is executed for all the pieces of the destination candidate posted information, a negative decision is made in step S450 and the process proceeds to step S490.

In step S490, the destination decision unit 20 transmits, to the driver's terminal 2, destination candidate information 55 for listing up the destination candidates at the driver's terminal 2 as shown in FIG. 1. The destination candidate information 55 includes information representing the location name and facility name of each destination candidate that are set by the above-described processing.

Note that the destination decision unit 20 may add additional information to the destination candidate information to be transmitted in step S490. This additional information is used for displaying a list of certain destination candidates among the spots specified as destination candidates, i.e., a particular spot that corresponds to a particular piece of the posted information that shows a maximal number of times of access and those spots that are present in a region within a predetermined range from the particular spot as destination candidates on a priority basis. For instance, assuming that the particular spot corresponds to the piece of the posted information which shows a maximal number of times of access, the destination decision unit 20 selects those spots that are present in the vicinity, i.e., within a predetermined distance range (for instance, within 10 km) from the particular spot and transmits destination candidate information corresponding to such spots after it gives predetermined flag information thereto. Upon receipt of the destination candidate information with the predetermined flag information, the driver's terminal 2 displays thereat a list of the candidates of destination with the predetermined flag information on a priority basis. With these measures, a list of candidates of destination can be displayed in a manner in which the driver may make selection more easily according to the number of times of access to the posted information. On this occasion, for those destination candidates that are to be displayed on a priority basis, a further priority for being displayed may be set to the destination candidates to be displayed with priority according to the number of times of access to the posted information.

In step S500, the destination decision unit 20 decides whether or not the destination information 56 representing the result of setting the destination is received from the driver's terminal 2 as shown in FIG. 1 in response to the destination candidate information 55 transmitted in step S490. If the destination information 56 is received, the process proceeds to step S510.

In step S510, the destination decision unit 20 sets the destination based upon the received destination information 56. After the processing in step S510 is executed, the processing shown in the flowchart in FIGS. 6A and 6B is terminated. The destination decision unit 20 is able to perform decision of the destination by the processing explained above. Note that the result of the decision of the destination by the destination decision unit 20 is notified from the destination decision unit 20 to the destination-circumjacent area information acquisition unit 30.

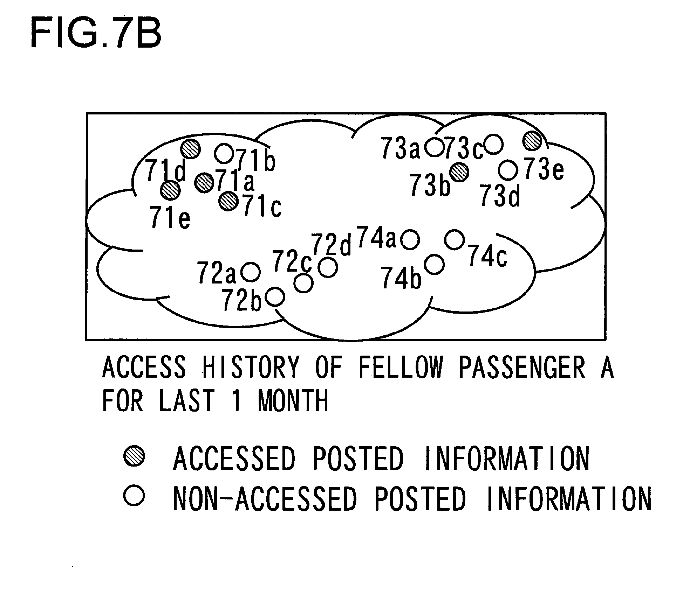

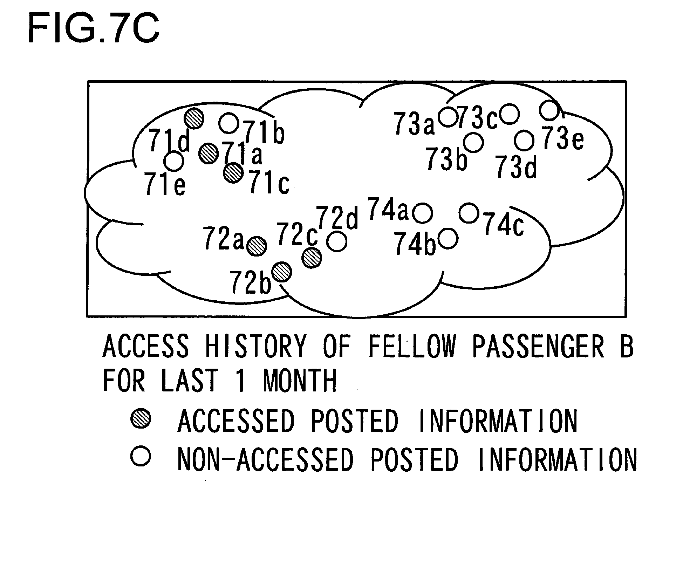

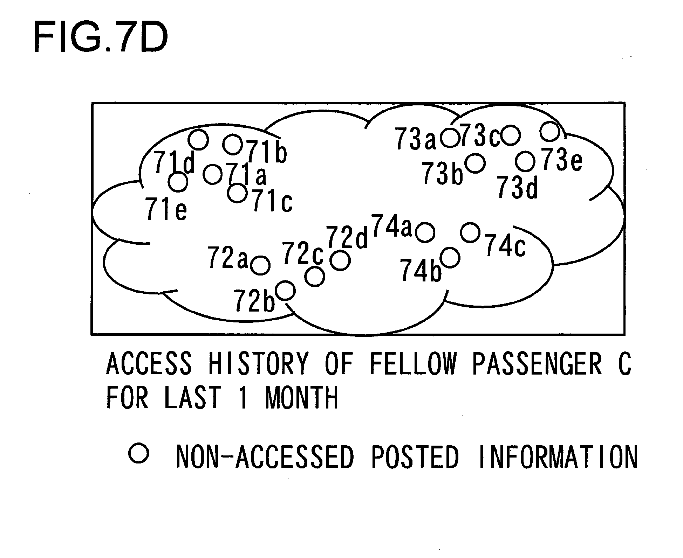

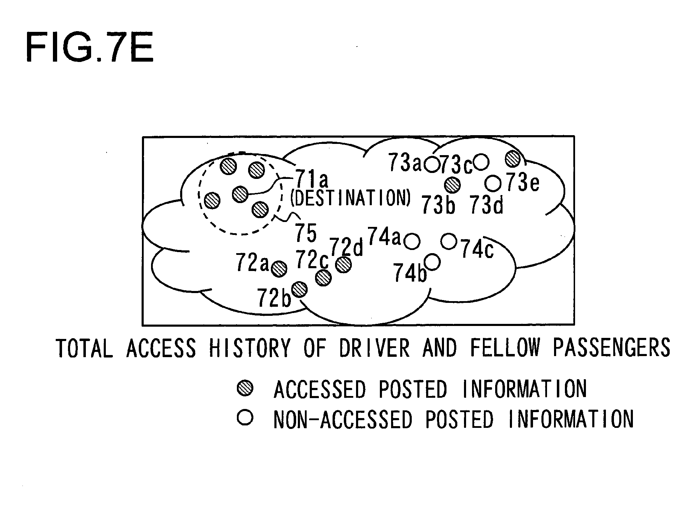

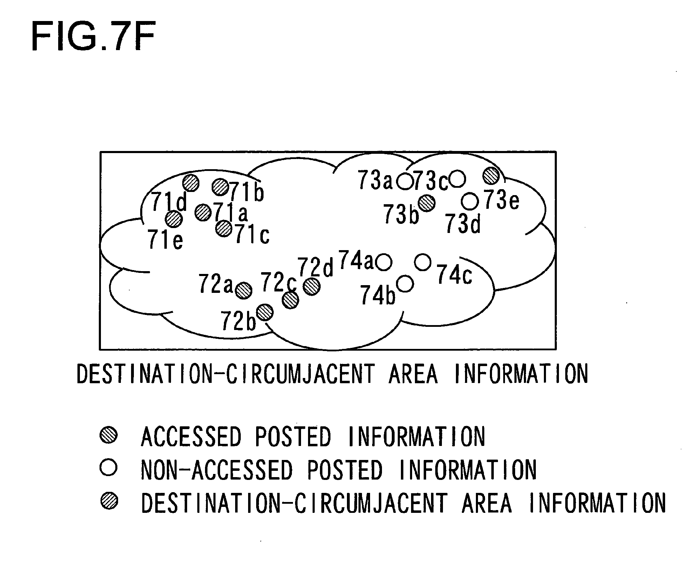

Next, a method of acquiring destination-circumjacent area information by the destination-circumjacent area information acquisition unit 30 is explained. FIG. 7 presents an explanatory diagram of the method of acquiring destination-circumjacent area information. Here, an example is explained in which the driver and three fellow passengers A, B and C are aboard on the same vehicle in the same manner as in the case shown in FIG. 5. Note that FIGS. 7A through 7D, like FIGS. 5A through 5D, illustrate access histories of the posted information by the driver and the fellow passengers A, B and C, respectively, in a predetermined period of time in past.

The destination-circumjacent area information acquisition unit 30 acquires total access history for each of the pieces of the posted information by the driver and the fellow passengers A through C based upon the respective access histories of the driver and the fellow passengers A through C. Specifically, the total access history is acquired from respective pieces of the posted information by specifying a particular piece of the posted information that has already been accessed within the predetermined period of time by at least a predetermined number of users (for instance, at least one user) among the driver and the fellow passengers A through C. As a result, as shown in FIG. 7E, the pieces of the posted information 71a through 71 e, 72a through 72d, 73b and 73e are judged to be those pieces of the posted information that represent the total access history. Note that in the same manner as that in which the destination decision unit 20 calculates the number of times of access to each of the pieces of the posted information, weighting may be performed according to the attribute of each user or the number of times of access by each user.

Once the total access history is acquired, the destination-circumjacent area information acquisition unit 30 specifies pieces of the posted information corresponding to the spot set as the destination among those pieces of the posted information that represent the total access history. From the piece of the posted information thus specified, it also sets an area within a predetermined distance range, for instance, within 30 km from the spot corresponding to the specified piece of the posted information, as a target area for acquiring destination-circumjacent area information. For instance, assuming that as shown in FIG. 7E, the piece of the posted information 71 a is specified as the piece of the posted information that corresponds to the spot set as the destination, an area 75 included in the predetermined range circumjacent the spot corresponding to the piece of the posted information 71a is set as a target area for acquiring the destination-circumjacent area information.

Once the target area for acquiring the destination-circumjacent area information is set, the destination-circumjacent area information acquisition unit 30 acquires various pieces of the posted information whose corresponding spots are present in the target area as destination-circumjacent area information among the pieces of the posted information acquired in the total access history. As a result, as shown in FIG. 7F, the pieces of the posted information71a through 71e are acquired as the destination-circumjacent area information. Once the destination-circumjacent area information is acquired, the destination-circumjacent area information acquisition unit 30 transmits the acquired destination-circumjacent area information to the driver's terminal 2 and the fellow passenger's terminal 3. As a result, as illustrated in FIG. 2, the screens 25 and 34 for providing the information about the destination to the driver and the fellow passengers are displayed at the driver's terminal 2 and the fellow passenger's terminal 3, respectively. Note that in consideration of safety during the operation of the vehicle, the screen 25 is not displayed at the driver's terminal 2 until the driver stops driving the vehicle.

As explained earlier, the destination-circumjacent area information acquisition unit 30 acquires, as the posted information about the destination, those pieces of the posted information having location information corresponding to the spots included within the predetermined range from the destination among the pieces of the posted information that have already been accessed by the driver or the fellow passenger or passengers. In such a manner, the destination-circumjacent area information can be acquired at the destination-circumjacent area information acquisition unit 30.

FIGS. 8A and 8B present a flowchart illustrating the flow of processing for acquiring the destination-circumjacent area information by the destination-circumjacent area information acquisition unit 30. The processing shown in the flowchart is executed at the destination-circumjacent area information acquisition unit 30 when the destination is set by the destination decision unit 20.

In step S610, the destination-circumjacent area information acquisition unit 30 acquires access history information concerning the posted information accessed by the driver in a predetermined period of time from the access history information database 44.

In step S620, the destination-circumjacent area information acquisition unit 30 adds the access history of the driver to the list of the accessed posted information based upon the access history information acquired in step S610. This list is to indicate which pieces of the posted information have already been accessed by the driver and the fellow passenger or passengers as described above. With this measure, each of the pieces of the posted information accessed by the driver in a predetermined period of time is registered in the accessed posted information list.

In step S630, the destination-circumjacent area information acquisition unit 30 decides whether or not there is present any fellow passenger who acquires no access history information in next step S640 among the fellow passengers corresponding to the driver who has acquired the access history information in step S610. If there are present one or more fellow passengers who acquire no access history information in the next step, the process proceeds to step S640. If not, that is, all the fellow passengers have acquired the access history information, the process proceeds to step S690.

In step S640, the destination-circumjacent area information acquisition unit 30 selects any particular fellow passenger from the fellow passengers who acquires no access history information and acquires the access history information relative to the pieces of the posted information accessed by that particular fellow passenger within the predetermined period of time from the access history information database 44.

In step S650, the destination-circumjacent area information acquisition unit 30 decides whether or not there is present any piece of accessed posted information that is not selected in next step S660 among the pieces of the posted information accessed by the particular fellow passenger based upon the access history information acquired in step S640. If there is present any piece of the accessed posted information that is not selected, the process proceeds to step S660. If not, that is, all the pieces of the posted information accessed by the particular fellow passenger have been already selected, the process returns to step S630.

In step S660, the destination-circumjacent area information acquisition unit 30 selects any one of the pieces of the non-selected accessed posted information among the pieces of the posted information accessed by the fellow passenger in the access history information acquired in step S640.

In step S670, the destination-circumjacent area information acquisition unit 30 decides whether or not there is present the piece of the accessed posted information selected in step S660 in the pieces of the accessed posted information registered in the above-described accessed posted information list. If such a piece of the accessed posted information is present, the process returns to step S650. If not, the process proceeds to step S680.

In step S680, the destination-circumjacent area information acquisition unit 30 adds the piece of the accessed posted information selected in step S660 to the accessed posted information list. After the processing in step S680 is executed, the process returns to step S650.

When the process returns from step S670 or S680 to step S650, the destination-circumjacent area information acquisition unit 30 executes the processing in each of the step S650 and subsequent steps repeatedly. With these measures, the pieces of the posted information accessed by the particular fellow passenger indicated by the access history information of the fellow passenger acquired in step S640 are selected in order and the above-described processing is executed. When the processing in each of the steps has been executed to all the pieces of the posted information accessed by the particular fellow passenger, a negative decision is made in step S650 and the process returns to step S630.

In addition, when the process returns from step S650 to step S630, the destination-circumjacent area information acquisition unit 30 executes the processing in each of step S630 and subsequent steps repeatedly. With these measures, the respective pieces of the access history information of the fellow passengers are acquired repeatedly in order and the above-described processing in each of the steps is executed. When the accessed posted information is acquired for all the fellow passengers, a negative decision is made in step S630 and the process proceeds to step S690.

In step S690, the destination-circumjacent area information acquisition unit 30 decides whether or not there is present a non-selected piece of the accessed posted information not selected in next step S700 among the pieces of the accessed posted information registered in the above-described accessed posted information list. If there is present any non-selected piece of the accessed posted information, the process proceeds to step S700. If not, that is, all the pieces of the accessed posted information registered in the accessed posted information list have already been selected, the process proceeds to step S730.

In step S700, the destination-circumjacent area information acquisition unit 30 selects any one of the non-selected pieces of the accessed posted information among the pieces of accessed posted information registered in the accessed posted information list.

In step S710, the destination-circumjacent area information acquisition unit 30 decides whether or not the location corresponding to the piece of the accessed posted information selected in step S700 is within a predetermined range of distance, for instance, within 30km, from the destination. If the location is within the predetermined range of distance, the process proceeds to step S720. If not, the process returns to step S690.

In step S720, the destination-circumjacent area information acquisition unit 30 adds the piece of the accessed posted information selected in step S700 to the destination-circumjacent area information. With this measure, the pieces of the accessed posted information corresponding to the locations within the predetermined range of distance from the destination are acquired as the destination-circumjacent area information. After the processing in step S720 is executed, the process returns to step S690.

When the process returns from step S710 or S720 to step S690, the destination-circumjacent area information acquisition unit 30 executes the processing in each of steps S690 through S720 repeatedly. With these measures, the pieces of the accessed posted information registered in the accessed posted information list are selected in series and the above-described processing in each of the steps is executed. When the processing is executed for all the pieces of the accessed posted information, a negative decision is made in step S690 and the process proceeds to step S730.

In step S730, the destination-circumjacent area information acquisition unit 30 transmits the destination-circumjacent area information 57 for performing provision of information concerning the set destination to the driver and the fellow passengers to the driver's terminal 2 and the fellow passenger's terminal 3 as shown in FIG. 1. The destination-circumjacent area information 57 includes each of the pieces of the accessed posted information deemed as the destination-circumjacent area information by the above-described processing. After the processing in step S730 is executed, the destination-circumjacent area information acquisition unit 30 terminates the processing in the flowchart shown in FIGS. 8A and 8B.

Through the above-mentioned processing, the destination-circumjacent area information acquisition unit 30 is able to acquire the destination-circumjacent area information and provide the acquired information to the driver and the fellow passengers.

According to the embodiment of the present invention explained earlier, the following operations and advantageous effects are acquired.
(1) The server device 1 includes the information accumulation unit 40 in which posted information having location information is accumulated in advance, the fellow passenger decision unit 10, the destination decision unit 20, and the destination-circumjacent area information acquisition unit 30. The server device 1 decides a driver of a vehicle and one or more fellow passengers who are aboard on the vehicle through the fellow passenger decision unit 10. It specifies, through the destination decision unit 20, destination candidates of the vehicle based upon access histories of the posted information by the driver and the fellow passenger or passengers. Furthermore, it acquires, through the destination-circumjacent area information acquisition unit 30, posted information concerning the destination set based upon the destination candidates specified by the destination decision unit 20 from among the posted information accumulated by the information accumulation unit 40 and transmits the destination-circumjacent area information based upon the acquired pieces of the posted information to the driver and the fellow passenger or passengers to perform provision of information based upon the posted information to the driver and the fellow passenger or passengers. With these measures, when a plurality of users take a car ride together and move toward a destination, appropriate information can be provided to each of the users based upon the posted information accumulated in the server device 1 in advance.
(2) The fellow passenger decision unit 10 acquires probe information from each of a plurality of persons inclusive of the driver and compares the probe information acquired from the driver with the probe information acquired from the persons other than the driver, respectively, at every predetermined cycles (step S130). Based on the result of the comparisons, a person whose probe information has a difference from the probe information of the driver within a predetermined range a plurality of predetermined times consecutively is decided as a fellow passenger (steps S140, S150, S100, S160, and S170 through S210). With these measures, the fellow passenger or passengers who are aboard on the same vehicle together with the driver can be identified reliably.
(3) Preferably, the probe information includes at least one of location information, acceleration information and moving direction information. With this construction, it can be accurately judged whether or not the user is the fellow passenger from the result of the comparison of his probe information with that of the driver.
(4) The destination decision unit 20 calculates the number of times of access to each of the pieces of the posted information by the driver and the fellow passenger or passengers (step S330, S390 and S400) and identifies a spot corresponding to each of the pieces of the posted information of which the calculated number of times of access is equal to or greater than a predetermined value as a destination candidate (step S430, S440, S450 through S480). With these measures, a spot which is appropriate as a destination candidate of the vehicle can be identified reliably and easily based upon the access histories of the posted information viewed by the driver and the fellow passenger or passengers.
(5) In step S490, the destination decision unit 20 may provide the driver with destination candidate information for displaying a list of destination candidates from the spots specified as the destination candidates with placing a priority to the spot corresponding to a particular piece of the posted information whose number of times of access is maximum and those spots that are present in an area within a predetermined range from that particular spot. With these measures, the list of the destination candidates can be displayed at the driver's terminal 2 in a manner in which the driver can make a selection more easily according to the number of times of access thereto.
(6) The destination-circumjacent area information acquisition unit 30 acquires, among the pieces of the posted information accessed by the driver or the fellow passenger or passengers, those pieces of the posted information including location information corresponding to spots that are present in an area within a predetermined range from the destination as posted information concerning the destination (steps S690 through S720). With these measures, appropriate posted information concerning the destination can be acquired reliably and easily.

The embodiments and various variations are exemplary and the present invention is not limited thereto so far as the features of the invention are not damaged. Various modifications can be made without departing from the scope of the invention.

## Claims

1. A method of providing information based on posted information having location information from a server in which the posted information is accumulated in advance, the method comprising:
deciding a driver of a vehicle and one or more fellow passengers who are aboard on the vehicle;
identifying a destination candidate of the vehicle based upon access histories of the posted information by the driver and the fellow passenger or passengers;
acquiring pieces of posted information concerning a destination set based upon the destination candidate from among the posted information; and
performing provision of information based upon the acquired pieces of the posted information to the driver and the fellow passenger or passengers from the server device.

2. A method of providing information according to claim 1, wherein the server device:
acquires probe information from each of a plurality of persons inclusive of the driver;
compares the acquired probe information of the driver with the acquired probe information of each of the persons other than the driver at every predetermined cycles; and
decides a person whose probe information has a difference from the probe information of the driver which is within a predetermined range predetermined times consecutively as the fellow passenger.

3. A method of providing information according to claim 2, wherein
the probe information includes at least one of location information, acceleration information and moving direction information.

4. A method of providing information according to any one of claims 1 through 3, wherein the server device:
calculates respective number of times of access by the driver and the fellow passenger or passengers to the respective pieces of the posted information; and
identifies spots corresponding to pieces of the posted information whose calculated numbers of times of access are each equal to or greater than a predetermined value as the destination candidates.

5. A method of providing information according to claim 4, wherein
the server device provides the driver with destination candidate information for displaying a list of the destination candidates with placing priority to a particular spot corresponding to a piece of the posted information whose number of times of access is maximal and those spots that are present in an area within a predetermined range from the particular spot among the spots identified as the destination candidates.

6. A method of providing information according to any one of claims 1 through 5, wherein
the server device acquires, as the posted information concerning the destination, a piece of the posted information having location information of a spot that is present in an area within a predetermined range from the destination among the pieces of the posted information accessed by the driver or the fellow passenger or passengers.

7. A server device comprising:
an information accumulation unit in which posted information having location information is accumulated in advance;
a fellow passenger decision unit that decides a driver of a vehicle and one or more fellow passengers who are aboard on the vehicle;
a destination decision unit that identifies a destination candidate of the vehicle based upon access histories of the posted information by the driver and the fellow passenger or passengers; and
a destination-circumjacent area information acquisition unit that acquires, from among the posted information accumulated in the information accumulation unit, those pieces of posted information concerning a destination set based upon the destination candidate identified by the destination decision unit, and that transmits destination-circumjacent area information based upon the acquired pieces of the posted information to the driver and the fellow passenger or passengers.

8. A server device according to claim 7, wherein the fellow passenger deciding unit:
acquires probe information from each of a plurality of persons inclusive of the driver;
compares the acquired probe information of the driver with the acquired probe information of each of the persons other than the driver at every predetermined cycles; and
decides a person whose probe information has a difference from the prove information of the driver which is within a predetermined range predetermined times consecutively as the fellow passenger.

9. A server device according to claim 8, wherein
the probe information includes at least one of location information, acceleration information and moving direction information.

10. A server device according to any one of claims 7 through 9, wherein the destination decision unit:
calculates respective number of times of access by the driver and the fellow passenger or passengers to the respective pieces of the posted information; and
identifies spots corresponding to pieces of the probe information whose calculated numbers of times of access are each equal to or greater than a predetermined value as the destination candidates.

11. A server device according to claim 10, wherein
the destination decision unit provides the driver with destination candidate information for displaying a list of the destination candidates with placing priority to a particular spot corresponding to a piece of the posted information whose number of times of access is maximal and those spots that are present in an area within a predetermined range from the particular spot among the spots identified as the destination candidates.

12. A server device according to any one of claims 7 through 11, wherein
the destination-circumjacent area information acquisition unit acquires, as the posted information concerning the destination, a piece of the posted information having location information of a spot that is present in an area within a predetermined range from the destination among the pieces of the posted information accessed by the driver or the fellow passenger or passengers.

13. An information terminal to be connected to a server device according to any one of claims 7 through 12 and is configured to provide information based upon the destination-circumjacent area information transmitted from the destination-circumjacent area information acquisition unit to the driver or the fellow passenger or passengers.
